# EUROPÄISCHE PATENTSCHRIFT

(11) **EP 2 169 147 B1**
(45) Veröffentlichungstag und Bekanntmachung des Hinweises auf die Patenterteilung: **05.09.2018**
(21) Anmeldenummer: 08016757.0
(22) Anmeldetag: 24.09.2008
(51) Int. Cl.: E04H 15/06, B60P 3/34

(54) **Zeltkonstruktion**
Tent structure
Construction de tente

(43) Veröffentlichungstag der Anmeldung: 31.03.2010
(73) Patentinhaber: Holtkamp, Egbert Berend, 9561 JK Ter Apel (NL)
(72) Erfinder: Holtkamp, Egbert Berend, 9561 JK Ter Apel (NL)
(74) Vertreter: Pott, Ulrich

(56) Entgegenhaltungen:
- GB-A- 508 287
- GB-A- 723 591
- US-A- 1 803 237
- US-A- 1 949 751
- US-A- 2 027 551
- US-A- 3 364 973
- US-A- 3 730 196

## Beschreibung

Die Erfindung betrifft eine Zeltkonstruktion für insbesondere Campinganhänger, Wohnwagen, Reisemobile o. dgl. Campingfahrzeuge, gemäß dem Oberbegriff des Anspruchs 1.

Zeltkonstruktionen sind in vielfältiger Ausführung als Teil von Campingausrüstungen seit langem bekannt. Neben frei aufstellbaren Zelten werden ähnliche Baugruppen auch in Form von Campinganhängern mit klappbaren Gestängekonstruktionen, als Reisemobile mit anbaubarem Zeltvordach o. dgl. Konstruktionen verwendet.

In US 3,364,973 wird eine nach Art einer an sich bekannten Markise handhabbare Stoffbahn für einen Wohnwagen vorgeschlagen. Dabei ist diese Markisenbahn aus einer eingerollten Abdeckstellung in eine Gebrauchslage herausziehbar bzw. -rollbar. In dieser Gebrauchs-Stellung der Markise werden zwei Aussteifungsstreben an den parallelen Seitenrändern wirksam, so dass eine rechteckige Wirkfläche der Markisenbahn insgesamt schräg nach vorn gespannt werden kann. Diese Markise bildet eine unabhängig von dem Wohnwagen einsetzbare Baugruppe, wie sie allgemein auch als ein Sonnensegel über Terrassen von Wohnhäusern, Lokalen o. dgl. eingesetzt werden kann.

Gemäß US 3,730,196 wird ein für ein als Kleinbus, Van o. dgl. Fahrzeug vorgesehenes Vordach vorgeschlagen, wobei an diesem stabilen Fahrzeugdach wesentliche Elemente einer zeltartigen Konstruktion fixiert werden. Das am Fahrzeugdach angelenkte Spannsystem basiert darauf, dass eine mehrgliedrige Einheit aus Stützstreben 30, 32 und einem Spannteil 46 im Bereich einer Rohrstütze 24 als stabilisierbares Vordach so zusammenwirken, dass die beiden Stangen 30, 32 aus einer zum Fahrzeugdach parallelen Nichtgebrauchsstellung herausschwenkbar sind und danach die Spannstrebe 46 zumindest eine der Stangen 30 so erfassen kann, dass das Vordach insgesamt eine ebene ausgesteifte rechteckige Schutzfläche bildet.

In US 1,949,751 wird die Kombination einer zur Abdeckung eines Autos vorgesehenen Zelt-Plane mit einem "begehbaren" Dachteil vorgeschlagen. Dabei wirken zwei parallele Gestängebaugruppen 26, 27, 28 und ein zu diesen beabstandeter Vertikalpfosten 29 so zusammen, dass ein Seitenwandteil 19 des "Autozeltes" in eine einen zusätzlichen Nutzraum bildende Schutzabdeckstellung gebracht werden kann.

In GB 508287 ist ein transportables Zelt vorgeschlagen, das mittels eines am Auto festlegbaren Tragarmes E erfassbar ist und danach die Zeltwände in einer hängenden Position in die Nutzstellung gebracht werden können. Auch in US 1,803,237 wird eine aufwändige Gestängebaugruppe zum Aufbau eines direkt an einem Personenkraftwagen vorgesehenen Vorzeltes vorgeschlagen, eine Konstruktion gemäß GB 723591 zeigt eine "hängende" Zeltkonstruktion, und aus US 2,027,551 ist ebenfalls eine am Fahrzeug mittels eines Tragarmes gehaltene, hängende Zeltkonstruktion bekannt.

Die Erfindung befasst sich mit dem Problem, eine insbesondere als Zusatzbaugruppe für einen Campinganhänger vorgesehene Zeltkonstruktion zu schaffen, die eine Dachbaugruppe mit vergleichsweise einfachen Bauteilen bildet, damit der Dachhaut variable Schutz- bzw. Abdeckpositionen vorgebbar sind und diese Einstellungen mit geringem Aufwand auch von weniger geübten Bedienpersonen ausführbar sind.

Die Erfindung löst diese Aufgabe durch eine Zeltkonstruktion für Campingfahrzeuge o. dgl. Baugruppen mit den Merkmalen des Anspruchs 1. Weitere vorteilhafte Ausgestaltungen ergeben sich aus den Ansprüchen 2 bis 19.

Bei der für ein Campingfahrzeug konzipierten Zeltkonstruktion ist erfindungsgemäß eine nach Art eines Vordaches ausgeführte Dachbaugruppe vor-gesehen, die mit nur einer im Bereich des Campingfahrzeugs fixierbaren, dabei eine im wesentlichen spitzwinklig zu einer vertikalen Hochachse geneigte Einbaulage definierenden und in dieser eine jeweilige Schutzstellung für eine flexible Dachhaut vorgebenden Druckstrebe aufgebaut wird.

Diese Druckstrebe bildet dabei ein in seiner Funktion variabel ausführbares und entsprechend der praktisch zu realisierenden Zeltkonstruktion anpassbares Basisteil für eine Vielzahl von Campingausrüstungen. Mit dieser Baugruppe wird eine optimale Nutzraumerweiterung für Campingfahrzeuge, Wohnwagen oder ein Klappgestänge aufweisende Campinganhänger erreicht. Dabei ist mit vergleichsweise einfach handhabbaren Montagemitteln eine schnelle Anpassung an die Gegebenheiten des jeweiligen Aufstellortes möglich.

Die im wesentlichen einstückig ausführbare Druckstrebe bildet dabei ein variabel einsetzbares Zubehörteil für Wohnwagen-Vorzelte o. dgl. Konstruktionen. Dieses Vorzelt mit einem oder mehreren aus flexiblem Material bestehenden Zeltwandbereich(en) kann nach Art eines Sonnensegels oder Regenschutzdaches aufgespannt und dabei auch ein seitlich geschlossener Raum gebildet werden. Die Druckstrebe wird mit dem jeweiligen Campingfahrzeug verbunden und dabei in vorhandene Teile der Stütz- und Haltekonstruktion integriert.

Die einteilig, mehrteilig oder teleskopierbar ausgebildete Druckstrebe kann insbesondere mit den Stützstangen eines in einem Campinganhänger transportablen Klappgestänges so verbunden werden, dass in dessen Nahbereich an unterschiedlichen Einbaupositionen ein nach Art des Vorzeltes bzw. des Vordaches überdeckter Schutzbereich im Umfeld des Campinganhängers erzeugbar ist. Die erfasste Dachhaut wird dabei mit der nur einen Druckstrebe in optimalen Stützstellungen positioniert, zur Fixierung der Druckstrebe an Teilen des Klappgestänges sind vergleichsweise einfache Verbindungsbaugruppen in Form von Klemmhaltem bzw. Klemmgelenken vorgesehen und sämtliche Teile sind für eine besonders einfache Montage und Demontage der Druckstrebe bzw. des gesamten Vorzeltes konzipiert.

Weitere Einzelheiten und vorteilhafte Ausgestaltungen der Erfindung ergeben sich aus der nachfolgenden Beschreibung und der Zeichnung, die mehrere Ausführungsbeispiele von Zeltkonstruktionen mit erfindungsgemäßer Druckstrebe veranschaulichen. In der Zeichnung zeigen:
- Fig. 1: eine Prinzipdarstellung eines Campinganhängers in Gebrauchsstellung mit an dessen Klappgestänge durch eine Druckstrebe gehaltenem Dachteil,
- Fig. 2: eine Seitenansicht ähnlich einer Linie II-II in Fig. 1 mit die Einbaulage der Druckstrebe verdeutlichendem Dachteil,
- Fig. 3: eine Innenansicht schräg von unten auf das in Einbaulage gespannte Dachteil mit der darunter befindlichen Druckstrebe am Klappgestänge,
- Fig. 4: eine vergrößerte Ausschnittsdarstellung des Verbindungsbereichs der Druckstrebe an einer Baugruppe des Klappgestänges,
- Fig. 5: eine Darstellung ähnlich Fig. 4 mit zwei unterschiedlichen Ausführungsformen der Abstützung der Druckstrebe am Klappgestänge,
- Fig. 6: eine vergrößerte Ausschnittsdarstellung der Festlegung der Druckstrebe am vorderen Ende des Dachteils,
- Fig. 7: eine zweite Ausführung der Druckstrebe mit an deren vorderem Ende vorgesehenem Zusatzträger,
- Fig. 8: eine Seitenansicht ähnlich Fig. 2 mit einer teleskopierbaren Druckstrebe an einer Schwenkhalterung, und
- Fig. 9: eine Seitenansicht ähnlich Fig. 8 mit bogenförmiger Druckstrebe.

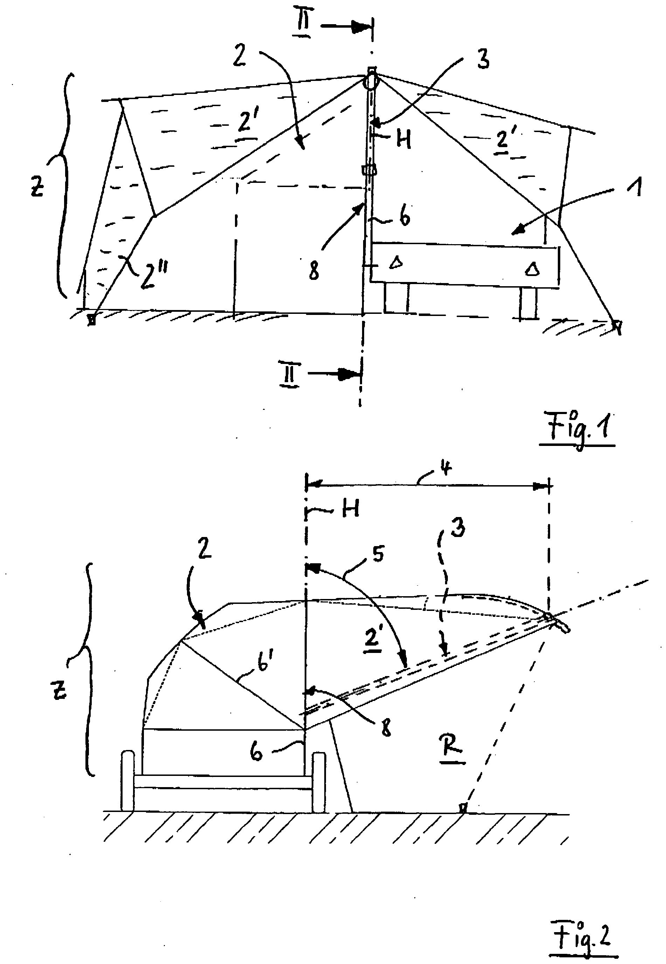

In Fig. 1 ist ein als Campinganhänger ausgeführtes Campingfahrzeug 1 dargestellt, dessen in Gebrauchsstellung gezeigte Zeltkonstruktion Z in an sich bekannter Ausführung insgesamt mit 2 bezeichnete Dachteile aus flexiblem Material aufweist, die als ein entsprechendes Zeltdach aufspannbar sind. Ebenso ist denkbar, dass die Zeltkonstruktion Z im Bereich eines Wohnwagens oder Reisemobils (nicht dargestellt) aufgebaut wird.

Ausgehend von einer derartigen Zeltkonstruktion Z zeichnet sich das erfindungsgemäße Konzept dadurch aus, dass ein zusätzlicher Dachteil 2' in eines der vorhandenen Camping-Systeme integriert wird (Fig. 2). Dieses Dachteil 2' ist dabei nur mittels einer am Campingfahrzeug 1 gehaltenen, eine im wesentlichen spitzwinklig zu einer vertikalen Hochachse H geneigte Einbaulage definierenden und zumindest eine Schutzstellung (für den Raum R) vorgebenden Druckstrebe 3 erfasst. Damit bildet das aus Zeltbahn o. dgl. flexiblem Material bestehende Dachteil 2' einen variabel einsetzbaren Sonnen- oder Regenschutz nach Art eines Vorzeltes, das für eine Vielzahl von Camping-Systemen einsetzbar ist.

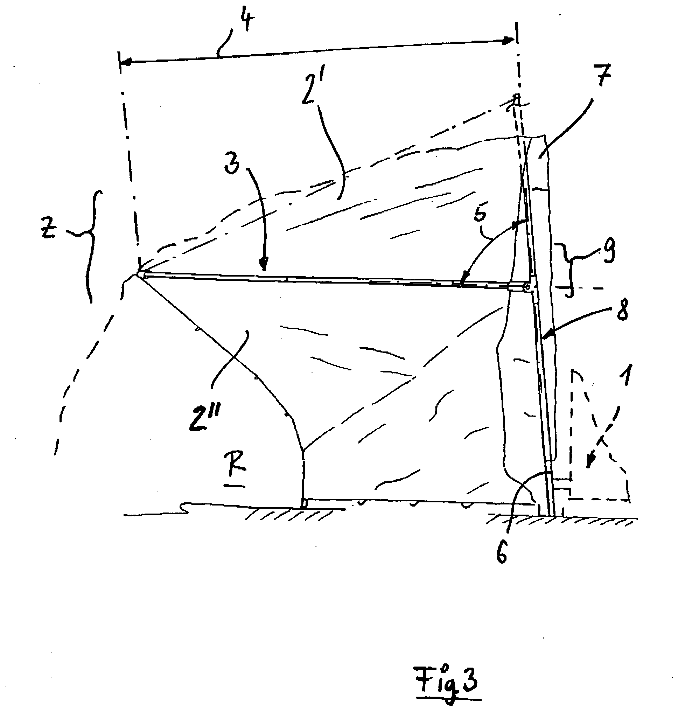

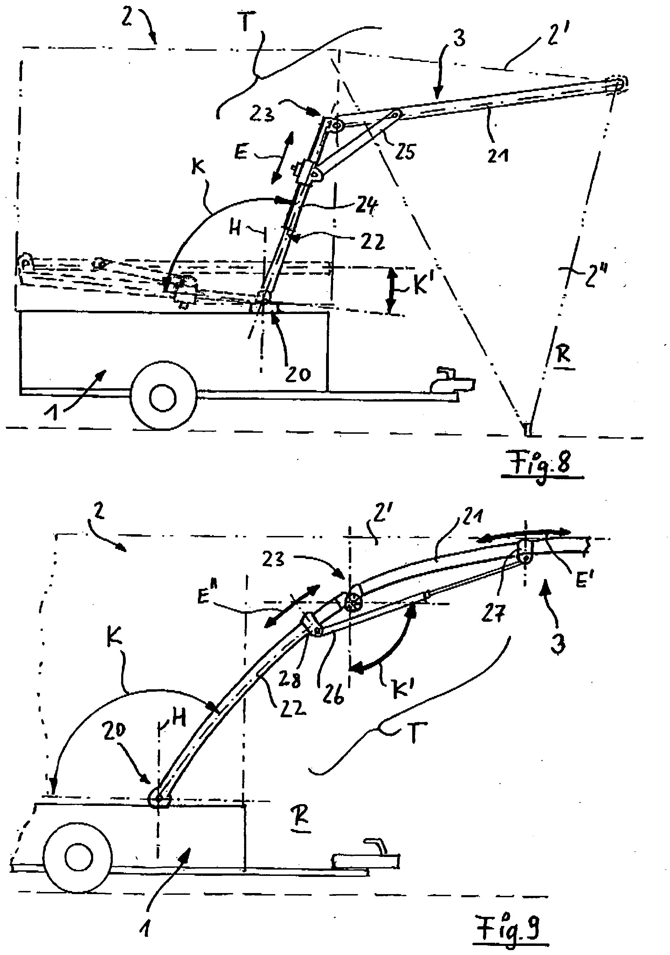

Mit dieser vergleichsweise einfach ausführbaren Druckstrebe 3 können dem Dachteil 2' weitgehend variabel vorgebbare Spannweiten 4 sowie Spannstellungen (Winkel 5) vorgegeben werden. Die Zusammenschau von Fig. 1 bis Fig. 3 verdeutlicht, dass die Druckstrebe 3 insbesondere als Zubehörteil für ein an sich bekanntes, starre Stützstangen 6 aufweisendes und in der aufgefalteten Gebrauchslage (Fig. 3) eine flexible Dachhaut 7 untergreifendes Standard-Klappgestänge 8 vorgesehen sein kann. In den dargestellten Ausführungsformen ist die Druckstrebe 3 als ein im wesentlichen einteiliges Bauteil vorgesehen, wobei ebenfalls eine mehrteilige Ausbildung bzw. ein Aufbau der Druckstrebe 3 aus teleskopierbaren Teilen, beispielsweise Rohrelementen, denkbar ist (Fig. 8, Fig. 9).

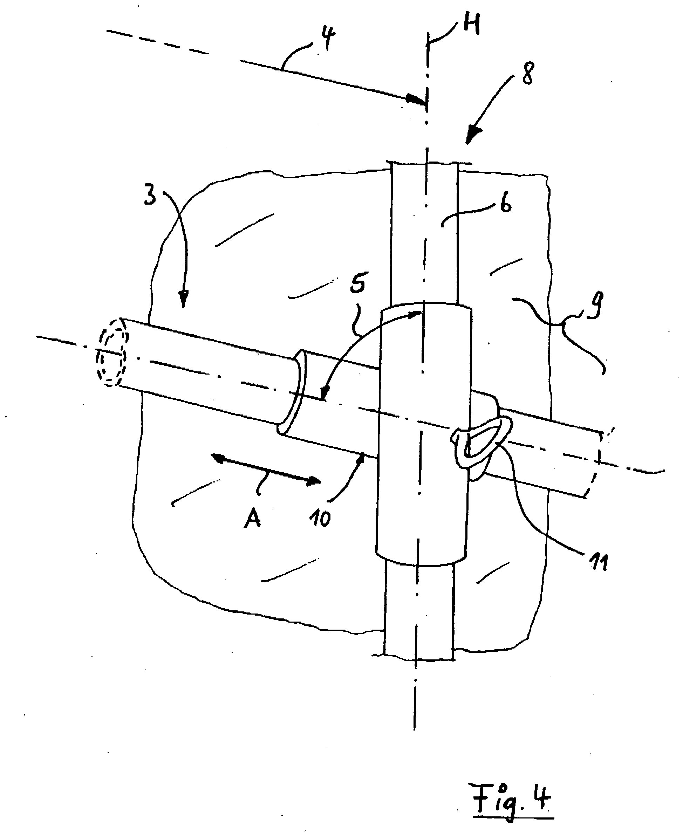

Die mit einer der Stützstangen 6 des Klappgestänges 8 (Fig. 4) verbindbare Druckstrebe 3 ist einerseits mittels einer lösbaren Halterung 9 auf jeweilige veränderbare Stützweiten 4 und/oder -winkel 5 einstellbar, wobei ausgehend von diesem Verbindungsbereich bei 9 andererseits die Druckstrebe 3 im wesentlichen freitragend das vorgelagerte Dachteil 2' untergreift (Fig. 3).

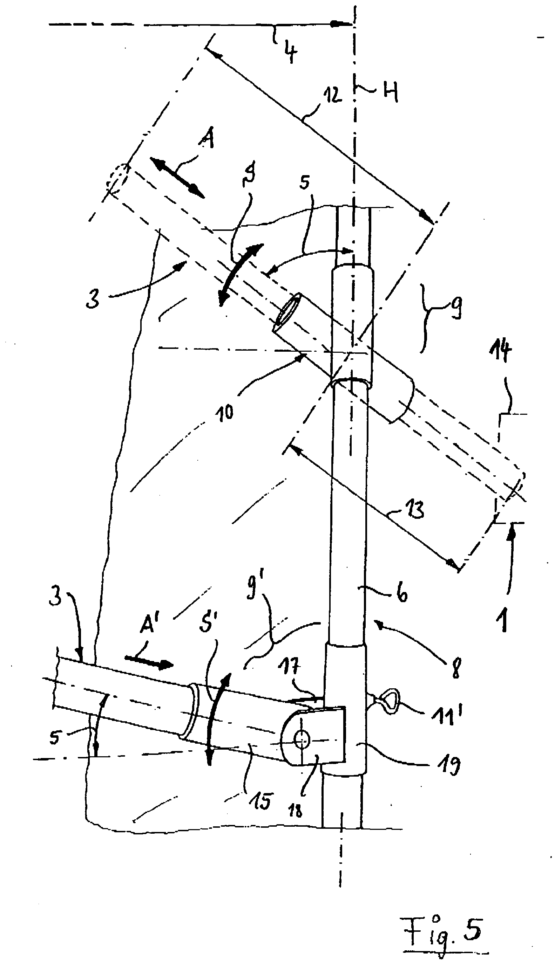

Die Ausführung der Halterung 9 gemäß Fig. 4 und Fig. 5 sieht vor, dass die Druckstrebe 3 ein an der Stützstange 6 befindliches und die lösbare Halterung bildendes Gegenglied 10 in Form einer Hülse längsverschieblich (Pfeil A) durchgreift. Dabei ist mittels einer entsprechenden Klemmschraube 11 o. dgl. Verbinder eine einfache Fixierung dann möglich, wenn die Druckstrebe 3 in Pfeilrichtung A in die optimale Spannstellung gedrückt ist und damit die Zeltbahn bzw. das Dachteil 2' gespannt wird.

Mit dieser Fixierung im Bereich der Halterung 9 definiert die längsverschieblich gehaltene Druckstrebe 3 zwei in ihrer Länge veränderbare Strebenabschnitte 12, 13, so dass sich verschiedene Möglichkeiten weiterer Abstützung eröffnen. Für eine besonders stabile Fixierung der Druckstrebe 3 ist vorgesehen, dass der im Bereich der lösbaren Halterung 9 insbesondere zum Nutzraum des Anhängers 1 hin gerichtete Strebenabschnitt 13 eine hintere Abstützungszone 14 (Fig. 5, obere Darstellung) bildet, wobei in diesem Bereich auch eine Fixierung der Druckstrebe 3 an einem Aufbauteil des Campinganhängers möglich ist. Ebenso ist denkbar, dass die Druckstrebe 3 an einer zweiten Stützstange 6' (Fig. 2) des im Bereich des Campinganhängers 1 vorgesehenen Klappgestänges 8 die Verbindungszone 14 definiert.

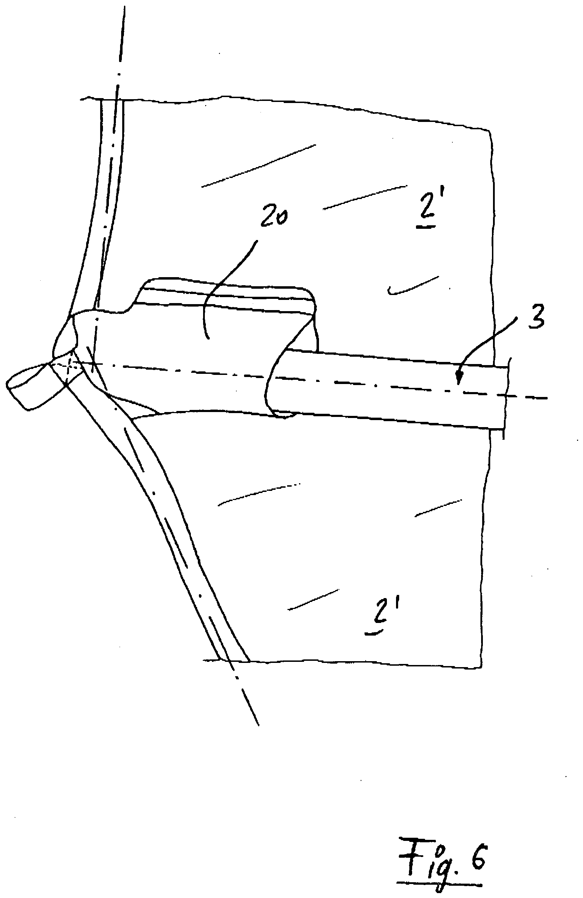

Zur Realisierung von weitgehend variablen Stützwinkeln 5 wird die Druckstrebe 3 im Verbindungsbereich 9 zur Stützstange 6 durch eine Gelenkbaugruppe schwenkbeweglich gehalten (Pfeil S, S'). In Fig. 4 und Fig. 5 sind dabei unterschiedliche Varianten dieser Abstützung 9, 9' dargestellt, wobei jeweils eine stufenlose Einstellung der Stützweite 4 bzw. des Stützwinkels 5 möglich ist. Die Darstellung in Fig. 5 (unterer Bereich) zeigt die Abstützung der Druckstrebe 3 im Bereich einer Halterung 9', die mit einem Hülsenteil 15 versehen ist, das an einem Halteplatten 17, 18 aufweisenden Gegenlager 19 eine gelenkige Aufnahme bildet, wobei in das Hülsenteil 15 die Druckstrebe 3 einsteckbar ist (Pfeil A'). Am jeweils der Halterung 9, 9' gegenüberliegenden Ende greift die Druckstrebe 3 in eine am Dachteil 2' vorgesehene Aufnahmetasche 20 (Fig. 6) ein.

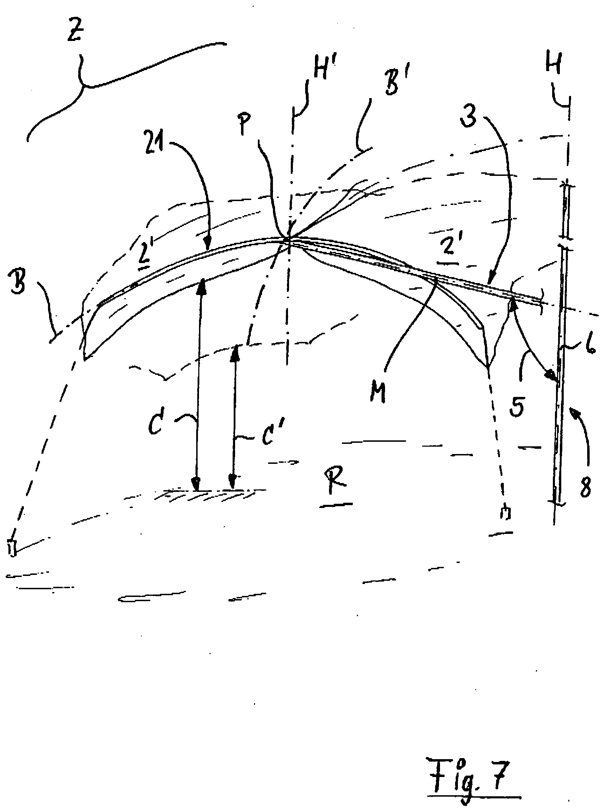

In einer erweiterten Ausführung des Systems gemäß Fig. 7 ist eine Konstruktion gezeigt, bei der am freien Ende der Druckstrebe 3 eine den vorgelagerten Dachteil 2' weitgehend vollständig untergreifende Spannstrebe 21 als Zusatzteil vorgesehen ist. Diese im Bereich einer Hochachse H' am vorderen Ende der Druckstrebe 3 schwenkbeweglich aufnehmbare Spannstrebe 21 kann dabei quer (Bogen B) und/oder parallel (Bogen B') zur Längsachse M der Druckstrebe 3 ausgerichtet werden. Dies wird dadurch erreicht, dass die Spannstrebe 16 nach Art eines Pendelarms gelenkig bei P mit der Druckstrebe 3 verbunden ist.

Mit dieser erweiterten Ausführung der Dach-Konstruktion mit dem Pendelarm 16 ist im Bereich des vorgelagerten Dachteils 2' eine bogenförmige Dachhautkontur erreichbar. Das Dachteil 2' kann dabei beispielsweise entsprechend dem Sonnenstand, einer bevorzugten Windrichtung o. dgl. Wettereinflüssen in entsprechenden Winkellagen (Bogen B, B') bzw. Bodenabstandslagen (Abstand C, C') optimal positioniert werden. Dabei ist auch ein den Schutzraum R seitlich begrenzender Wandbereich 2" in eine gewünschte Lage bringbar (Fig. 3), so dass der Raum R auch vollständig verschlossen werden kann.

In Fig. 8 und 9 sind zwei weitere Ausführungsformen der Druckstrebe 3 dargestellt, wobei die an einer fahrzeugseitigen Gelenkbaugruppe 20 gehaltene Druckstrebe 3 als eine mehrteilige Trageinheit T ausgebildet ist. Mit diesem System wird erreicht, dass die Druckstrebe 3 aus einer raumsparend gefalteten Transportstellung (Strichdarstellung gemäß Fig. 8) in die entsprechende Schutzstellung aufklappbar ist (Pfeil K, K').

Die Trageinheit T weist dabei in vorteilhafter Ausführung zwei Schenkel 21 und 22 auf, die durch ein Gelenk 23 so verbunden sind, dass die vorbeschriebenen Steilbewegungen ausführbar sind und die Trageinheit T weitgehend vollständig im Fahrzeug 1 aufnehmbar ist. Ebenso ist denkbar, dass die am fahrzeugseitigen Gelenk 20 gehaltene Trageinheit T mit einem mehrteiligen Teleskopschenkel (nicht dargestellt) ausgeführt ist, der - ähnlich der in Fig. 9 dargestellten bogenförmigen Schenkelausführung - in die Schwenkrichtung K hochgeschwenkt und entsprechend der Anzahl von Teleskopteilen über den Raum R herausgezogen wird. In einer weiteren Ausführung des Systems können an parallelen Seiten des Fahrzeugs 1 jeweilige Trageinheiten T bzw. Druckstreben 3 angeordnet sein, so dass die Dachhaut 2' in zwei Bereichen erfasst wird (nicht dargestellt).

In der Ausführung der Trageinheit T gemäß Fig. 8 ist der Schenkel 22 als ein Teleskoprohr ausgeführt, wobei ein schubverlagerbarer Teil 24 (Pfeil E) mittels einer Führungsstange 25 am vorderen Schenkel 21 angelenkt ist.

In der Ausführung gemäß Fig. 9 sind die beiden im Gelenk 23 (Schwenkbewegung K') verbundenen Schenkel 21, 22 entsprechend der Fahrzeuglänge bemessen, wobei zwischen diesen beiden Schenkeln 21 und 22 ein Zylinder 26 als Stützelement so vorgesehen ist, dass sowohl die dargestellte Schutzstellung gewährleistet als auch eine entsprechende Transportstellung (ähnlich Fig. 8) erreicht werden kann. Dazu kann der Stützzylinder 26 im Bereich seiner Verbinder 27 und 28 verschiebbar (Pfeil E', E") gehalten sein.

## Patentansprüche

1. Zeltkonstruktion für Campingfahrzeuge (1), **dadurch gekennzeichnet, dass** die Zeltkonstruktion (Z) ein zusätzliches Dachteil (2') aufweist, das mittels nur einer am Campingfahrzeug (1) gehaltenen, eine im wesentlichen spitzwinklig zu einer vertikalen Hochachse (H) geneigte Einbaulage definierenden und zumindest eine Schutzstellung über einem erweiterten Nutzraum (R) vorgebenden Druckstrebe (3) erfassbar ist.

2. Zeltkonstruktion nach Anspruch 1, **dadurch gekennzeichnet, dass** die dem Dachteil (2') weitgehend variable Spannweiten (4) und Spannstellungen (Winkel 5) vorgebende Druckstrebe (3) klapp-, schwenk- und/oder verschiebbar mit dem Campingfahrzeug (1) verbunden ist.

3. Zeltkonstruktion nach Anspruch 1 oder 2, **dadurch gekennzeichnet, dass** die Druckstrebe (3) als Zubehörteil für ein an sich bekanntes, starre Stützstangen (6, 6') aufweisendes und in aufgefalteter Gebrauchslage ein flexibles Zeltdach (2) untergreifendes Standard-Klappgestänge (8) vorgesehen ist.

4. Zeltkonstruktion nach einem der Ansprüche 1 bis 3, **dadurch gekennzeichnet, dass** die Druckstrebe (3) mehrteilig ausgebildet ist.

5. Zeltkonstruktion nach einem der Ansprüche 1 bis 3, **dadurch gekennzeichnet, dass** die Druckstrebe (3) einteilig ausgebildet ist.

6. Zeltkonstruktion nach einem der Ansprüche 1 bis 4, **dadurch gekennzeichnet, dass** die Druckstrebe (3) aus mehreren teleskopierbaren Teilen besteht.

7. Zeltkonstruktion nach einem der Ansprüche 1 bis 6, **dadurch gekennzeichnet, dass** die mit einer der Stützstangen (6, 6') des Klappgestänges (8) verbindbare Druckstrebe (3) einerseits mittels einer lösbaren Halterung (9, 9') auf jeweilige veränderbare Stützweiten (4) und/oder -winkel (5) einstellbar ist und ausgehend von diesem Verbindungsbereich andererseits die Druckstrebe (3) im wesentlichen freitragend das vorgelagerte Dachteil (2') untergreift.

8. Zeltkonstruktion nach einem der Ansprüche 1 bis 7, **dadurch gekennzeichnet, dass** die Druckstrebe (3) ein an der Stützstange (6) befindliches und die lösbare Halterung (9) bildendes Gegenglied (10) längsverschieblich durchgreift.

9. Zeltkonstruktion nach Anspruch 8, **dadurch gekennzeichnet, dass** die längsverschieblich gehaltene Druckstrebe (3) zwei in ihrer Länge veränderbare Strebenabschnitte (12, 13) definiert.

10. Zeltkonstruktion nach Anspruch 8 oder 9, **dadurch gekennzeichnet, dass** der vom Bereich der lösbaren Halterung (9) zum Nutzraum des Anhängers (1) hin gerichtete Strebenabschnitt (13) eine hintere Abstützungszone (14) bildet.

11. Zeltkonstruktion nach einem der Ansprüche 8 bis 10, **dadurch gekennzeichnet, dass** der in den Nutzraum überstehende Strebenabschnitt (13) der Druckstrebe (3) am Aufbau des Campinganhängers (1) fixierbar ist.

12. Zeltkonstruktion nach Anspruch 11, **dadurch gekennzeichnet, dass** die Druckstrebe (3) an einer zweiten Stützstange (6') des im Bereich des Campinganhängers (1) vorgesehenen Klappgestänges (8) fixierbar ist.

13. Zeltkonstruktion nach einem der Ansprüche 1 bis 12, **dadurch gekennzeichnet, dass** die Druckstrebe (3) im Verbindungsbereich zur Stützstange (6, 6') und/oder zum Aufbau des Fahrzeugs (1) durch eine Gelenkbaugruppe (19, 20) schwenkbeweglich gehalten ist.

14. Zeltkonstruktion nach Anspruch 13, **dadurch gekennzeichnet, dass** die im Bereich der Gelenkbaugruppe (19, 20) schwenkbeweglich gehaltene Druckstrebe (3) stufenlos auf die unterschiedlichen Stützweiten (4) und/oder -winkel (5) einstellbar ist.

15. Zeltkonstruktion nach Anspruch 13 oder 14, **dadurch gekennzeichnet, dass** die an der fahrzeugseitigen Gelenkbaugruppe (20) gehaltene Druckstrebe (3) als mehrteilige Trageinheit (T) ausgebildet ist, deren Schenkel (21, 22) aus einer gefalteten Transportstellung in die Schutzstellung aufklappbar sind.

16. Zeltkonstruktion nach einem der Ansprüche 1 bis 15, **dadurch gekennzeichnet, dass** am freien vorderen Ende der Druckstrebe (3) eine den vorgelagerten Dachteil (2') weitgehend vollständig untergreifende Spannstrebe (21) vorgesehen ist

17. Zeltkonstruktion nach Anspruch 16, **dadurch gekennzeichnet, dass** die Spannstrebe (21) quer oder parallel zur Längsachse (M) der Druckstrebe (3) ausrichtbar ist.

18. Zeltkonstruktion nach Anspruch 16 oder 17, **dadurch gekennzeichnet, dass** die Spannstrebe (21) nach Art eines Pendelarmes gelenkig mit der Druckstange (3) verbunden ist.

19. Zeltkonstruktion nach einem der Ansprüche 16 bis 18, **dadurch gekennzeichnet, dass** die als Pendelarm vorgesehene Spannstrebe (21) zumindest im Bereich des vorgelagerten Dachteils (2') eine bogenförmige Dachhautkontur bildet.

## Claims

1. Tent structure for camping vehicles (1), **characterised in that** the tent structure (Z) comprises an additional roof part (2') which can be grasped by means of just one strut (3) which is held on the camping vehicle (1), defines a mounting position inclined at a substantially acute angle to a vertical axis (H) and provides at least one protective position via an extended useful space (R).

2. Tent structure according to claim 1, **characterised in that** the strut (3) providing the roof part (2') with largely variable spans (4) and tensioning positions (angle 5) is foldably, pivotally and/or movably connected to the camping vehicle (1).

3. Tent structure according to either claim 1 or claim 2, **characterised in that** the strut (3) is provided as an accessory part for a standard flap rod assembly (8) comprising per se known, rigid support rods (6, 6') and extending under a flexible tent roof (2) in an unfolded use position.

4. Tent structure according to any of claims 1 to 3, **characterised in that** the strut (3) is formed of multiple parts.

5. Tent structure according to any of claims 1 to 3, **characterised in that** the strut (3) is integrally formed.

6. Tent structure according to any of claims 1 to 4, **characterised in that** the strut (3) consists of a plurality of telescopic parts.

7. Tent structure according to any of claims 1 to 6, **characterised in that** the strut (3), which is connectable to one of the support rods (6, 6') of the flap rod assembly (8), can be adjusted by means of a detachable retainer (9, 9') to respectively adjustable spans (4) and/or support angles (5) and, proceeding from this connection region, the strut (3) extends under the pre-mounted roof part (2') in a substantially cantilevered manner.

8. Tent structure according to any of claims 1 to 7, **characterised in that** the strut (3) passes through a counter member (10), which is located on the support rod (6) and forms the detachable retainer (9), in a longitudinally movable manner.

9. Tent structure according to claim 8, **characterised in that** the strut (3) retained in a longitudinally movable manner defines two strut portions (12, 13) which are variable in length.

10. Tent structure according to either claim 8 or claim 9, **characterised in that** the strut portion (13) directed towards the useful space of the trailer (1) from the region of the detachable retainer (9) forms a rear support region (14).

11. Tent structure according to any of claims 8 to 10, **characterised in that** the strut portion (13) of the strut (3) protruding into the useful space can be fastened to the body of the caravan (1).

12. Tent structure according to claim 11, **characterised in that** the strut (3) can be fastened to a second support rod (6') of the flap rod assembly (8) provided in the region of the caravan (1).

13. Tent structure according to any of claims 1 to 12, **characterised in that** the strut (3) is pivotally retained by means of a joint assembly (19, 20) in the region of connection to the support rod (6, 6') and/or to the body of the vehicle (1).

14. Tent structure according to claim 13, **characterised in that** the strut (3) pivotally retained in the region of the joint assembly (19, 20) is continuously adjustable to the different spans (4) and/or support angles (5).

15. Tent structure according to either claim 13 or claim 14, **characterised in that** the strut (3) retained on the vehicle-mounted joint assembly (20) is formed as a multi-part supporting unit (T) of which the legs (21, 22) can fold out of a folded transport position into the protective position.

16. Tent structure according to any of claims 1 to 15, **characterised in that** a tie (21) which extends largely completely under the pre-mounted roof part (2') is provided at the free front end of the strut (3).

17. Tent structure according to claim 16, **characterised in that** the tie (21) can be oriented transversely to or in parallel with the longitudinal axis (M) of the strut (3).

18. Tent structure according to either claim 16 or claim 17, **characterised in that** the tie (21) is hingedly connected to the strut (3) in the manner of a swing arm.

19. Tent structure according to any of claims 16 to 18, **characterised in that** the tie (21) provided as a swing arm forms an arcuate roof membrane contour at least in the region of the pre-mounted roof part (2').

## Revendications

1. Structure de tente pour véhicule de camping (1), **caractérisée en ce que** la structure de tente (Z) comporte une partie toit supplémentaire (2') qui peut être accrochée au moyen d'un seul montant de compression (3) maintenu au niveau du véhicule de camping (1), définissant une position de montage inclinée suivant un angle sensiblement aigu par rapport à un axe vertical (H) et prédéfinissant au moins une position de protection au-dessus d'un espace utile étendu (R).

2. Structure de tente selon la revendication 1, **caractérisée en ce que** le montant de compression (3) conférant des portées (4) et des positions de serrage (angle 5) en grande variable à la partie toit (2') est relié de manière pliable, pivotante et/ou coulissante au véhicule de camping (1).

3. Structure de tente selon la revendication 1 ou 2, **caractérisée en ce que** le montant de compression (3) est prévu sous la forme d'un accessoire destiné à une barre pliable standard (8) connue en soi qui comprend des barres de support rigides (6, 6') et s'engageant, en position d'utilisation dépliée, sous un toit de tente flexible (2).

4. Structure de tente selon l'une des revendications 1 à 3, **caractérisée en ce que** le montant de compression (3) est constitué de plusieurs parties.

5. Structure de tente selon l'une des revendications 1 à 3, **caractérisée en ce que** le montant de compression (3) est formé d'un seule pièce.

6. Structure de tente selon l'une des revendications 1 à 4, **caractérisée en ce que** le montant de compression (3) est constitué de plusieurs parties télescopiques.

7. Structure de tente selon l'une des revendications 1 à 6, **caractérisée en ce que** le montant de compression (3), pouvant être relié à l'une des barres de support (6, 6') de la barre pliable (8), peut être réglé d'une part au moyen d'un dispositif de support amovible (9, 9') à des portées de support (4) et/ou des angles de support (5) variables respectives et d'autre part, à partir de cette zone de liaison, le montant de compression (3) s'engage sensiblement en saillie sous la partie toit (2').

8. Structure de tente selon l'une des revendications 1 à 7, **caractérisée en ce que** le montant de compression (3) s'engage de façon coulissante longitudinalement à travers un élément homologue (10) situé au niveau de la barre de support (6) et formant le support amovible (9).

9. Structure de tente selon la revendication 8, **caractérisée en ce que** le montant de compression (3), supportée de manière coulissante longitudinalement, définit deux sections de montant de compression (12, 13) de longueur variable.

10. Structure de tente selon la revendication 8 ou 9, **caractérisée en ce que** la section de montant de compression (13), orientée en direction de l'espace utile de la remorque (1) depuis la zone du support amovible (9), forme une zone de support arrière (14).

11. Structure de tente selon l'une des revendications 8 à 10, **caractérisée en ce que** la section (13), débordant dans l'espace utile, du montant de compression (3) peut être fixée à la structure de la remorque de camping (1).

12. Structure de tente selon la revendication 11, **caractérisée en ce que** le montant de compression (3) peut être fixé à une deuxième barre de support (6') de la barre pliable (8) prévue au niveau de la remorque de camping (1).

13. structure de tente selon l'une des revendications 1 à 12, **caractérisée en ce que** le montant de compression (3) maintenu de manière pivotante dans la zone de raccordement à la barre de support (6, 6') et/ou à la structure du véhicule (1) par un ensemble formant charnière (19, 20).

14. Structure de tente selon la revendication 13, **caractérisée en ce que** le montant de compression (3), supporté de manière pivotante au niveau de l'ensemble formant charnière (19, 20), peut être réglé de façon continue pour aux différentes portées de support (4) et/ou aux différents angles de portée (5).

15. Structure de tente selon la revendication 13 ou 14, **caractérisée en ce que** le montant de compression (3), supporté de manière pivotante au niveau de l'ensemble formant charnière (20), est conçu comme une unité de support (T), constituée de plusieurs parties, dont les branches (21, 22) peuvent être dépliées d'une position repliée de transport dans la position de protection.

16. Structure de cellule selon l'une des revendications 1 à 15, **caractérisée en ce qu'**un montant de tension (21), s'engageant pratiquement entièrement sous la partie toit (2') pré-montée, est prévu à l'extrémité avant libre du montant de compression (3).

17. Structure de tente selon la revendication 16, **caractérisée en ce que** la barre de tension (21) peut être orientée transversalement ou parallèlement à l'axe longitudinal (M) du montant de compression (3).

18. Structure de tente selon la revendication 16 ou 17, **caractérisée en ce que** la barre de tension (21) est reliée de façon articulée à la barre de compression (3) à la manière d'un bras pendulaire.

19. Structure de tente selon l'une des revendications 16 à 18, **caractérisée en ce que** la barre de tension (21) réalisé sous la forme d'un bras pendulaire forme un contour extérieur de toit incurvé au moins au niveau de la partie toit (2') pré-montée.
